Europäisches Patentamt

European Patent Office

Office européen des brevets

(11) Veröffentlichungsnummer: **0 316 270 B1**

(19)

(12) **EUROPÄISCHE PATENTSCHRIFT**

(45) Veröffentlichungstag der Patentschrift: **20.01.93**

(21) Anmeldenummer: **88810709.1**

(22) Anmeldetag: **18.10.88**

(51) Int. Cl.5: **C08J 3/12**, C08J 3/14, C08L 1/10, B01J 20/22, C07B 57/00

(54) **Feinteilige Celluloseester aromatischer oder aromatisch-aliphatischer Carbonsäuren, Verfahren zu deren Herstellung und deren Verwendung.**

(30) Priorität: **26.10.87 CH 4202/87**
**24.06.88 CH 2431/88**

(43) Veröffentlichungstag der Anmeldung:
**17.05.89 Patentblatt 89/20**

(45) Bekanntmachung des Hinweises auf die Patenterteilung:
**20.01.93 Patentblatt 93/03**

(84) Benannte Vertragsstaaten:
**CH DE FR GB IT LI NL SE**

(56) Entgegenhaltungen:
**EP-A- 0 025 639**
**EP-A- 0 147 804**

**DATABASE CHEMICAL ABSTRACTS, Band 108, Nr. 18, 1987, Zusammenfassung Nr. 151833y, Columbus, Ohio, US**

**CHEMICAL PATENTS INDEX, BASIC ABSTRACTS JOURNAL, section A, week 8818, no. 88-123722/18, Derwent Publications Ltd, London, GB**

(73) Patentinhaber: **CIBA-GEIGY AG**
**Klybeckstrasse 141**
**CH-4002 Basel(CH)**

(72) Erfinder: **Francotte, Eric, Dr.**
**Violaweg 73/10**
**CH-4303 Kaiseraugst(CH)**
Erfinder: **Baisch, Gabriele**
**Zollstrasse 1**
**W-7858 Weil-Friedlingen(DE)**

EP 0 316 270 B1

**Beschreibung**

Die Erfindung betrifft teilkristalline, im wesentlichen sphärische Teilchen von Celluloseestern aromatischer oder aromatisch-aliphatischer Carbonsäuren, ein Verfahren zu deren Herstellung und deren Verwendung als stationäre Phase in chromatographischen Verfahren.

Mikrokristallines Cellulosetriacetat, das durch heterogene Veresterung erhältlich ist, hat sich bei der chromatographischen Trennung von Racematen in ihre Stereoisomeren in vielen Fällen bewährt. Auch Cellulose, andere Polysaccharide und deren Derivate eignen sich als stationäre Phase für solche Trennungen, vgl. T. Shibata et al., J. of Liquid Chrom., 9, 313-340 (1986).

Y. Okamoto et al. beschreiben in Chemistry Letters, S. 739-742 (1984) ein chromatographisches Trennmaterial, das aus einem mit Cellulosetriacetat oder -tribenzoat beschichteten makroporösen Silicagel besteht. Dieses Trägermaterial ist teuer. Ausserdem steht nur die Schicht des Cellulosederivates für die Trennung der Enantiomeren zur Verfügung, sodass die Trennleistungen bezüglich der Kapazität nicht ganz zufriedenstellen. K.-H. Rimböck schlagen im J. of Chromatography, 351, S. 346-350 (1986) vor, pulverförmige mikrokristalline Tribenzoylcellulose, die durch einfaches Ausfällen aus einer Lösung erhalten wird, als stationäre Phase zu verwenden. Die Trennleistung des pulverigen Materials ist ungenügend, und die Anwendung beschränkt sich auf analytische Problemstellungen. Die Teilchengrösse und die äussere Teilchengestalt kann zudem bei diesem Verfahren nicht gesteuert werden.

Im der EP-A-0 147 804 werden feinteilige und poröse Celluloseesterperlen aromatischer Carbonsäuren beschrieben, die zur Trennung von Racematen verwendet werden können. Es ist jedoch kein Herstellungsverfahren angegeben besonders für druckstabile und teilkristalline poröse Celluloseesterperlen, die für die Trennung von Racematen besonders geeignet sind.

In der EP-A-0 025 639 ist ein Verfahren zur Herstellung von sphärischen, porösen Celluloseteilchen beschrieben. Eine organische Lösung von Cellulosetriacetat, die einen längerkettigen Alkohol enthält, wird hierbei unter Rühren in einer wässrigen Phase suspendiert, die ein höhermolekulares Tensid, z.B. Polyvinylalkohol oder Gelatine, enthält. Nach Entfernen des organischen Lösungsmittels werden die erhaltenen Cellulosetriacetatteilchen isoliert und gereinigt und daraufhin verseift. Eigene Untersuchungen ergaben, dass die nach diesen Verfahren erhaltenen Cellulosetriacetatteilchen nur einen geringe spezifische Oberfläche und als stationäre Phase bei flüssigchromatographischen Verfahren nur ein geringes Trennvermögen für Racemate aufweisen.

Ein Gegenstand der Erfindung sind feinteilige Celluloseester aromatischer oder aromatisch-aliphatischer Carbonsäuren in Form von im wesentlichen sphärischen teilkristallinen Teilchen mit einem mittleren Durchmesser von 1 bis 200 $\mu$m, einer spezifischen Oberfläche von 10 bis 300 $m^2$/g, gemessen nach der BET-Methode und einer kalorimetrisch bestimmten Schmelzwärme von 1 bis 50 J/g.

Der mittlere Teilchendurchmesser beträgt bevorzugt 3 bis 100 $\mu$m, besonders 5 bis 80 $\mu$m. Für analytische Trennungen hat sich ein mittlerer Teilchendurchmesser von etwa 5 bis 50 $\mu$m und für präparative Trennungen von etwa 10 bis 100 $\mu$m als günstig erwiesen. Der mittlere Teilchendurchmesser kann auch nur einen relativ engen Bereich umfassen. Solche Materialien können durch Fraktionierung nach üblichen Verfahren wie z.B. Sedimentation, Sieben oder Sichten hergestellt werden.

Die spezifische Oberfläche beträgt bevorzugt 20 bis 80 $m^2$/g, besonders 30 bis 70 $m^2$/g.

Die erfindungsgemässen feinteiligen Celluloseester weisen überraschend den für die chromatographische Trennwirkung günstigen teilkristallinen Charakter auf. Die relative Kristallinität kann durch die Schmelzwärme der teilkristallinen Anteile der Celluloseester angegeben werden, die zweckmässig durch kalorimetrische Messung bestimmt wird, z.B. Differential Scanning Calorimetry (DSC). Die Schmelzwärme beträgt bevorzugt 2 bis 50 J/g, besonders 5 bis 30 J/g und insbesondere 10-25 J/g.

Die Carbonsäuren, von denen sich die Celluloseester ableiten, entsprechen bevorzugt der Formel R-X-COOH, worin X für eine direkte Bindung, $C_1$-$C_4$-Alkylen, $C_2$-$C_4$-Alkenylen, -Alkyliden oder -Alkinylen steht und R mono-, bi- oder tricyclisches, bevorzugt monocyclisches, $C_6$-$C_{14}$-Aryl oder Heteroaryl mit jeweils 5 oder 6 Ringatomen und einem bis drei, vorzugsweise einem oder zwei Heteroatomen aud der Gruppe N, O oder S darstellt, wobei R unsubstituiert oder mit $C_1$-$C_{12}$-, vorzugsweise $C_1$-$C_4$-Alkyl, $C_1$-$C_{12}$-, vorzugsweise $C_1$-$C_4$-Alkoxy, $C_1$-$C_{12}$-, vorzugsweise $C_1$-$C_4$-Alkylthio, Phenyl, Phenoxy, Phenylthio, Benzyl, Benzyloxy, Benzylthio, Cyano, Halogen, $C_1$-$C_8$-Acyl, $C_1$-$C_8$-Acyloxy, Hydroxyl, $C_1$-$C_{12}$-Alkoxycarbonyl, Phenoxycarbonyl, Benzyloxycarbonyl, Nitro oder Di($C_1$-$C_6$-alkyl)amino einoder mehrfach substituiert ist.
Bevorzugte Substituenten sind -Cl, Methyl, Ethyl und Methoxy.

X enthält in der Bedeutung von Alkylen bevorzugt 1 bis 3 und besonders 1 oder 2 C-Atome. X in der Bedeutung von Alkenylen, Alkyliden oder Alkinylen enthält bevorzugt 2 oder 3 C-Atome. Das Alkylen, Alkenylen und Alkinylen kann linear oder verzweigt sein. Beispiele sind Methylen, Ethylen, Ethyliden, Ethenylen, Ethinylen, 1,2- oder 1,3-Propylen, 1,1-oder 2,2-Propyliden, 1,2- oder 1,3-Prop-1-enylen oder 1,2- oder 1,3-Prop-2-enylen, 1,3-Propinylen, 1,2-, 1,3-, 1,4- oder 2,3-Butylen, 1,1-oder 2,2-Butyliden, 1,2-, 1,3- oder 1,4-But-1-enylen, -But-2-enylen oder But-3-enylen, 1,2-, 1,3- oder 1,4-But-1-inylen, -But-2-inylen oder But-3-inylen. Besonders bevorzugt stellt X $C_1$-$C_3$-Alkylen, $C_2$-$C_3$-Alkyliden oder -Alkenylen oder eine direkte Bindung dar. Insbesondere bedeutet X eine direkte Bindung, Methylen, Ethylen oder Ethenylen. In einer bevorzugten Ausführungsform bedeutet X eine direkte Bindung oder 1,2-Ethenylen.

R in der Bedeutung von Aryl enthält bevorzugt 6 bis 10 C-Atome. Das Aryl kann mit Alkylen oder Alkenylen mit 2 bis 4 C-Atomen kondensiert sein. Beispiele für Aryl sind Phenyl, Naphthyl, Phenanthryl, Anthracyl, Indenyl, Indanyl, Fluorenyl, Fluorenonyl, Anthrachinonyl, Xanthonyl, Thioxanthonyl. Bevorzugt stellt R Naphthyl und besonders Phenyl dar.

R in der Bedeutung von Heteroaryl enthält bevorzugt 1 Heteroatom aus der Gruppe O, S und N. Das Heteroaryl kann mit Phenylen kondensiert sein. Beispiele für Heteroaryl sind Furyl, Thionyl, Pyrryl, Benzofuryl, Benzthionyl, Indyl, Pyridyl, Pyrimidyl, Chinolinyl und Isochinolinyl. Besonders bevorzugt ist Pyridyl.

Der Rest R kann ein- oder mehrfach, bevorzugt ein- bis dreifach, besonders ein- oder zweifach substituiert sein mit $C_1$-$C_{12}$-, besonders $C_1$-$C_4$-Alkyl, -Alkoxy oder -Alkylthio, wie z.B. Methyl, Ethyl, n- oder i-Propyl, n-, i- oder t-Butyl, Pentyl, Hexyl, Heptyl, Octyl, Nonyl, Decyl, Undecyl, Dodecyl und entsprechende Alkoxy- oder Alkylthioreste; besonders bevorzugt sind Methyl, Ethyl, Methoxy und Ethoxy;

Phenyl, Phenoxy, Phenylthio, Benzyl, Benzyloxy und Benzylthio, bevorzugt Phenyl oder Benzyl; Hydroxyl, Cyano, Halogen, besonders F, Cl und Br; $C_1$-$C_8$-, bevorzugt $C_1$-$C_4$-Acyl oder -Acyloxy, z.B. Acetyl, Chloracetyl, Dichloracetyl, Trichloracetyl, Fluoracetyl, Trifluoracetyl, Propionyl, Butanoyl, Benzoyl und Phenylacetyl und entsprechende Acyloxyreste; $C_1$-$C_{12}$-, bevorzugt $C_1$-$C_4$-Alkoxycarbonyl, Phenoxy- und Benzyloxycarbonyl.

In einer bevorzugten Ausführungsform handelt es sich bei dem Substituenten um $C_1$-$C_4$-Alkyl oder Halogen, besonders Methyl, Ethyl, F oder Cl.

In einer bevorzugten Ausführungsform stellt X eine direkte Bindung, $C_1$-$C_3$-Alkylen oder $C_2$-$C_3$-Alkenylen dar und R ist unsubstituiertes oder substituiertes Phenyl oder Pyridyl. Besonders bevorzugt ist X hierbei eine direkte Bindung, Methylen, Ethylen und Ethenylen.

Ein weiterer Gegenstand ist ein Verfahren zur Herstellung der erfindungsgemässen Celluloseester, das dadurch gekennzeichnet ist, dass man unter kräftigem Rühren eine Lösung eines Celluloseesters aromatischer oder aromatisch-aliphatischer Carbonsäuren in einem organischen Lösungsmittel, das 1 bis 50 Vol-%, bezogen auf die Menge des Lösungsmittels, eines $C_5$-$C_{22}$-Alkanols enthält, langsam zu einer Lösung eines anionischen Tensids in Wasser zugibt, unter Weiterrühren das organische Lösungsmittel entfernt, die festen Teilchen isoliert, auswäscht und trocknet.

Die Celluloseester können nach bekannten Veresterungsverfahren hergestellt werden. Der Polymerisationsgrad kann zwischen 5 und 1000, bevorzugt 5 bis 500 und besonders 10 bis 50 liegen.

Der Veresterungsgrad des Celluloseesters kann 1 bis 3, bevorzugt 2 bis 3 und besonders 2,5 bis 3 sein. Der erzielbare Veresterungsgrad kann von der Reaktivität der verwendeten Carbonsäure abhängen.

Mit der Rührgeschwindigkeit, die z.B. 100 bis 1000 Umdrehungen/ Minute betragen kann, sowie der Menge Celluloseester im organischen Lösungsmittel und der Zugabegeschwindigkeit der organischen Lösung zur wässrigen Phase kann die Teilchengrösse beeinflusst werden.

Die spezifische Oberfläche kann durch die Reaktionsbedingungen beeinflusst werden, z.B. die Wahl des Lösungsmittels, des Alkanols und Tensids; die Reaktionsführung, z.B. Zugabe- und Rührgeschwindigkeit, Verdampfungsgeschwindigkeit; und die Mengenverhältnisse von Lösungsmittel, Wasser, Alkanol, Tensid und Celluloseester.

Die Menge Celluloseester im organischen Lösungsmittel kann z.B. 1 bis 20, bevorzugt 1 bis 12 Gew.-% betragen, bezogen auf das Lösungsmittel.

Es kann vorteilhaft sein, ein im wesentlichen wasserunlösliches Lösungsmittel zu verwenden.

Das organische Lösungsmittel weist zweckmässig einen niedrigeren Siedepunkt auf als Wasser. Geeignete Lösungsmittel sind z.B. aromatische Kohlenwasserstoffe, Halogenkohlenwasserstoffe, besonders Fluor- und/oder Chlorkohlenwasserstoffe, cyclische Ether, Carbonsäureester und Ketone. Beispiele sind Benzol, Toluol, Xylol, Methylenchlorid, Chloroform, Trichlorfluormethan, Chlorethan, Trifluortrichlorethan, Dichlortetrafluorethan, Aceton, Methylethylketon, Diethylketon, Cyclohexanon, Tetrahydrofuran und Dioxan oder Gemische von solchen Lösungsmitteln. Besonders bevorzugt sind Methylenchlorid und Tetrahydrofuran.

Es können auch Lösungsmittel verwendet werden, die höher sieden als Wasser, z.B. Toluol, Xylol, Chlorbenzol, Ethylenglykol- oder Diethylenglykolether. Das Lösungsmittel wird dann zusammen mit Wasser entfernt. Es ist hierbei zweckmässig, das entfernte Wasser wieder zu ersetzen, z.B. während der Destillation, oder eine entsprechend höhere Menge an Wasser vorzulegen.

Die organische Lösung enthält ein Alkanol vorzugsweise in einer Menge von 5 bis 40 Vol-%. Das Alkanol kann verzweigt und vorzugsweise linear sein. Es enthält bevorzugt 7 bis 16 und besonders 7 bis 12 C-Atome. Beispiele sind Pentanol, Hexanol, Heptanol, Octanol, Nonanol, Decanol, Undecanol, Dodecanol, Tridecanol, Tetradecanol, Hexadecanol, Octadecanol und Eicosanol. Die Alkanole sind vorzugsweise im wesentlichen in Wasser unlöslich. Insbesondere bevorzugt sind lineare $C_7$-$C_{10}$-Alkanole.

Das Volumenverhältnis der organischen Lösung zur wässrigen Phase beträgt bevorzugt 10:1 bis 1:10, besonders 5:1 bis 1:5, und insbesondere 3:1 bis 1:3.

Das anionische Tensid ist bevorzugt in einer Menge von 0,05 bis 10, vorzugsweise 0,1 bis 5 Gew.-% in der wässrigen Lösung enthalten, bezogen auf die Menge des Wassers.

Bei dem anionischen Tensid kann es sich z.B. um eine Säure, einen Halbester von zwei- bis vierbasischen, besonders zwei- oder dreibasischen Säuren oder deren Salze handeln. Geeignete Salze sind z.B. Ammonium-, Alkali- (besonders Natrium- und Kalium-) oder Erdalkali-(besonders Magnesium- und Calzium-)salze.

Die Säuren und Halbester enthalten z.B. lineare oder verzweigte $C_3$-$C_{20}$-Alkylgruppen oder mit 1 bis 3 $C_1$-$C_{20}$-Alkyl substituierte Phenylgruppen. Die Säuren können auch $C_1$-$C_{20}$-Perfluoralkylgruppen enthalten. Geeignete Säuren sind z.B. Mono- oder Dicarbonsäuren, Sulfonsäuren, Phosphonsäuren und Phosphinsäuren. Geeignete mehrbasische Säuren für Halbester sind z.B. Schwefelsäure, Phosphorsäure, phosphorige Säure, Malonsäure und Maleinsäure. Solche Tenside sind in grosser Anzahl im National Standard Reference Data System (NSRDS), Nat. Bur. Stand. (U.S.) 36, Seiten 24-32, U.S. Government Printing Office (1971) beschrieben. Bevorzugt sind $C_8$-$C_{16}$-Schwefelsäurehalbester, besonders Laurylsulfat.

Das Verfahren kann so durchgeführt werden, dass man die Lösung des Celluloseesters unter Rühren zur wässrigen Phase tropft und danach unter Weiterrühren das organische Lösungsmittel entfernt, zweckmässig durch Destillation unter Erwärmen bis zum Siedepunkt des Lösungsmittels und/oder im Vakuum. Anschliessend isoliert man die Teilchen, z.B. durch Dekantieren oder Filtration. Darauf reinigt man die Teilchen z.B. durch Auswaschen mit Wasser und einem hydrophilen Lösungsmittel, vorteilhaft mit einem $C_1$-$C_4$-Alkanol. Danach wird das Material getrocknet.

Mit dem Verfahren erhält man überraschend Celluloseester aromatischer oder aromatisch-aliphatischer Carbonsäuren in Form von im wesentlichen sphärischen Teilchen, die eine hohe Porosität (spezifische Oberfläche) und einen teilkristallinen Charakter aufweisen, was für die chromatographische Enantiomerentrennung wichtig ist. Die Verwendung eines grossporigen Trägermaterials (z.B. Kieselgel Si 1000/4000) kann vermieden werden. Die Trennleistung ist überraschend hoch und besser als bei vergleichbaren Produkten. Vorteilhaft ist, dass höhere Aufgabemengen verwendet werden können. Besonders überraschend weisen die erfindungsgemässen Celluloseester eine ausserordentlich hohe Druckstabilität auf, was bisher nur durch ein Coating von Celluloseestern auf Kieselgelträgern möglich war [vgl. Chemistry Letters, S. 739-742 (1984)]. Durch diese hohe Druckstabilität ist das Material besonders für die Hochleistungsflüssigkeitschromatographie geeignet.

Ein weiterer Gegenstand der Erfindung ist die Verwendung der erfindungsgemässen Celluloseester als stationäre Phase in chromatographischen Verfahren, besonders zur Trennung von Racematen.

Die nachfolgenden Beispiele erläutern die Erfindung näher. Prozente sind Gewichtsprozente, wenn nicht anders erwähnt.

A) Herstellungsbeispiele

Beispiel 1:

5 g Cellulosetribenzoat werden in 150 ml Methylenchlorid mit 17 ml Heptanol versetzt. Die erhaltene Lösung wird bei Raumtemperatur in eine bei 400 Upm gerührte 0.75 % Natriumlaurylsulfatlösung (300 ml) getropft. Anschliessend wird bei derselben Rührgeschwindigkeit bei 40-42°C (Badtemperatur) das Methylenchlorid abgedampft. Der Rückstand wird abfiltriert und mit Wasser und Ethanol gewaschen. Das pulverige Produkt wird im Vakuumschrank bei 80°C (20 Std.) getrocknet. Ausbeute: 4.8 g (96 % der Theorie). Die kugelförmigen Teilchen mit einem Durchmesser von 10-30 μm können nach Bedarf durch Sieben oder Sedimentieren fraktioniert werden. Die physikalischen Eigenschaften des Produktes werden wie folgt bestimmt:
Spezifische Oberfläche: 59,6 $m^2$/g.
Die spezifische Oberfläche ($m^2$/g) wird nach der BET-Methode bestimmt.
Kristallinität: 19,3 J/g.
Die relative Kristallinität wird mit Hilfe von DSC (Differential Scanning Calorimetry; Mettler TA3000) aus der Schmelzwärme ΔH (J/g) bestimmt.

Beispiel 2:

Das Verfahren des Beispiels 1 wird mit variierten Zusammensetzungen wiederholt und liefert die in Tabelle 1 beschriebenen Produkte.

Tabelle 1

| Benzoyl cellulose (g) | $CH_2Cl_2$ (ml) | n-Hep tanol (ml) | $NLS^{1)}$ (%, ml) | Spezifische Oberfläche $(m^2/g)$ | DSC $\Delta H$ (J/g) | Durchmesser $(\mu m)$ |
|---|---|---|---|---|---|---|
| 36.6 | 1000 | 124 | 0,75, 2200 | 43,7 | 17,2 | 10-20 |
| 5 | 150 | 25 | 0,75, 300 | 64,2 | 18,9 | 10-30 |
| 5 | 75 | 25 | 0,75, 120 | 50,3 | 19,6 | 20-30 |
| 5 | 150 | 37,5 | 0,75, 300 | 40,9 | 17,6 | 10-20 |
| 50 | 750 | 150 | 0,75, 1200 | 46,5 | 15,4 | 20-30 |
| 4 | 120 | 20 | 1,50, 88 | 55,0 | 15,3 | 3-8 |
| 4 | 120 | 20 | 0,10, 88 | 63,1 | 15,6 | 5-15 |

1) NLS: Natriumlaurylsulfat-Lösung in Wasser

Beispiel 3:

Analog zum Beispiel 1 werden 6 g Cellulosetribenzoat in 180 ml $CHCl_3$ mit 30 ml Heptanol und 145 ml, 0.75%-iger Natriumlaurylsulfatlösung behandelt. Das Chloroform wird bei 65°C abgedampft. Das pulverige Material wird abfiltriert und gewaschen (Wasser, dann Ethanol) und anschliessend getrocknet, Ausbeute: 95 % der Theorie (spez. Oberfläche: 59,9 $m^2/g$; $\Delta H$: 14,45 J/g; Durchmesser: 5-10 $\mu m$).

Beispiel 4:

Analog zum Beispiel 1 werden 5 g Cellulosetribenzoat in 150 ml Methylenchlorid mit 17 ml Decanol und 300 ml 0,75%-iger Natriumlaurylsulfatlösung behandelt und isoliert. (Spez. Oberfläche: 31.6 $m^2/g$; $\Delta H$: 16,0 J/g; Durchmesser: 10-20$\mu m$).

Beispiel 5:

Analog zum Beispiel 1 werden 2 g Cellulosetribenzoat in 60 ml Methylenchlorid mit 10 ml Heptanol und 48 ml Natriumdodecylbenzylsulfosäure-Lösung (1 % in Wasser) behandelt und isoliert (spez. Oberfläche: 53,2 $m^2/g$; $\Delta H$: 15,8 J/g; Durchmesser: 5-10$\mu m$).

Beispiel 6:

Analog zum Beispiel 1 werden 10 g Celllulosetri(paramethylbenzoat) in 300 ml Methylenchlorid mit 50 ml Heptanol und 240 ml 0,7%-iger Natriumlaurylsulfat-Lösung behandelt und isoliert (spez. Oberfläche: 68,7 $m^2/g$; $\Delta H$: 10,6 J/g; Durchmesser: 5-10$\mu m$).

Beispiel 7:

Analog zum Beispiel 1 werden 10 g Cellulosetri-(meta-methylbenzoat) in 300 ml Methylenchlorid mit 50 ml Heptanol und 240 ml 0,7%-iger Natriumlaurylsulfat-Lösung und isoliert. (Spez. Oberfläche: 57, 8 $m^2/g$; $\Delta H$: 12,7 J/g; Durchmesser: 10-20$\mu m$).

Beispiel 8:

Analog zum Beispiel 1 werden 5 g Cellulosetricinnamat in 150 ml Methylenchlorid mit 45 ml Heptanol und 120 ml 0,1%-iger Natriumlaurylsulfat-Lösung behandelt und isoliert (spez. Oberfläche: 28,7 $m^2/g$; $\Delta H$: 8,2 J/g; Durchmesser: 5-20$\mu m$).

Beispiel 9:

5 g ortho-Methylbenzoylcellulose werden in 300 ml Tetrahydrofuran mit 12 ml Heptanol versetzt. Die Polymerlösung wird bei Raumtemperatur in eine bei 400 Upm gerührte 0,7% Natriumlaurylsulfatlösung in Wasser (300 ml) getropft. Anschliessend wird bei derselben Rührgeschwindigkeit bei 70-75°C (Badtemperatur) das Tetrahydrofuran abdestilliert. Der Rückstand wird abfiltriert und mit Wasser und Ethanol gewaschen. Das Produkt wird im Vakuumschrank bei 80°C getrocknet. Ausbeute: 4,9 g (98 % der Theorie). (Spez. Oberfläche: 36,1 $m^2/g$; $\Delta H$: 2,5 J/g; Durchmesser: 5-20 $\mu$m).

Beispiel 10:

Analog zum Beispiel 1 werden 3 g para-Ethylbenzoylcellulose in 180 ml Methylenchlorid mit 30 ml Heptanol und 180 ml 0,7%-iger Natriumlaurylsulfatlösung behandelt und isoliert (spez. Oberfläche: 28,6 $m^2/g$; $\Delta H$: 2,8 J/g; Durchmesser: 3-5 $\mu$m).

Beispiel 11:

Analog zum Beispiel 9 werden 5 g para-Chlorobenzoylcellulose in 150 ml Tetrahydrofuran mit 37,5 ml Heptanol und 300 ml 0.7%-iger Natriumlaurylsulfatlösung behandelt und isoliert (spez. Oberfläche: 68,3 $m^2/g$; $\Delta H$: 12,7 J/g; Durchmesser: 20-40 $\mu$m).

Beispiel 12:

Analog zum Beispiel 9 werden 5 g meta-Chlorbenzoylcellulose in 150 ml Tetrahydrofuran mit 35 ml Heptanol und 300 ml 0,7%-iger Natriumlaurylsulfatlösung behandelt und isoliert (spez. Oberfläche: 38,9 $m^2/g$; $\Delta H$: 10,8 J/g; Durchmesser: 5-15 $\mu$m).

B) Anwendungsbeispiele

Einige der hergestellten Produkte werden mit der Slurry-Methode in eine Stahlsäule (25 cm x 0,46 cm) gefüllt und mit verschiedenen Testracematen geprüft.

**Definition des Kapazitätsfaktors k' und des Trennfaktors α:**

$$\text{Kapazitätsfaktor (k')} = \frac{\left(\begin{array}{c}\text{Retentionsvolumen}\\\text{des Enantiomeren}\end{array}\right) - \left(\begin{array}{c}\text{Retentionsvolumen einer nicht}\\\text{zurückgehaltenen Verbindung}\end{array}\right)}{\left(\begin{array}{c}\text{Retentionsvolumen einer nicht}\\\text{zurückgehaltenen Verbindung}\end{array}\right)}$$

$$\text{Trennfaktor } (\alpha) = \frac{\text{Kapazitätsfaktor des 2. eluierten Enantiomeren}}{\text{Kapazitätsfaktor des 1. eluierten Enantiomeren}}$$

Die HPLC-Chromatographien werden mittels einer 110 B (Beckman) Pumpe durchgeführt. Die Detektion geschieht mittels UV-Spektroskopie (Shimadzu UV-120-02, ausgerüstet mit HPLC-Küvette Nr. 1200) und Polarimetrie (Perkin Elmer 241 LC). Die Chromatographie-Bedingungen sind: Hexan/2-Propanol (9:1) als Fliessmittel, Durchfluss 1 ml/Min, Temperatur 25°C. Die Ergebnisse sind in den Tabellen 2 bis 5 dargestellt.

Tabelle 2

| Enantiomerentrennung racemischer Verbindungen am Produkt gemäss Beispiel 1 | | | |
|---|---|---|---|
| Racemat | Kapazitätsfaktor | | Trennfaktor $\alpha$ |
| | $k'_1$ | $k'_2$ | |
| Phenylethanol | 1,29 | 2,42 | 1,88 |
| Phenylethandiol | 2,0 | 2,86 | 1,43 |
| Phenylvinylsulfon | 7,91 | 12,71 | 1,60 |
| Butan-1,3-diol-diacetat | 3,64 | 7,19 | 1,98 |
| Tetrahydro-1-naphthol | 0,94 | 2,06 | 2,19 |

Tabelle 3

| Enantiomerentrennung racemischer Verbindungen am Produkt gemäss Beispiel 7 | | | |
|---|---|---|---|
| Racemat | Kapazitätsfaktor | | Trennfaktor $\alpha$ |
| | $k'_1$ | $k'_2$ | |
| trans-Stilbenoxyd | 3,67 | 11,60 | 3,10 |
| 1-Naphthylethanol | 8,67 | 11,5 | 1,33 |

Tabelle 4

| Enantiomerentrennung racemischer Verbindungen am Produkt gemäss Beispiel 8 | | | |
|---|---|---|---|
| Racemat | Kapazitätsfaktor | | Trennfaktor $\alpha$ |
| | $k'_1$ | $k'_2$ | |
| 1-Naphthylethanol | 10,3 | 11,96 | 1,16 |
| Mandelsäure Methylester | 13,07 | 15,11 | 1,16 |

Tabelle 5

| Enantiomerentrennung racemischer Verbindungen am Produkt gemäss Beispiel 6 | | | |
|---|---|---|---|
| Racemat | Kapazitätsfaktor | | Trennfaktor $\alpha$ |
| | $k'_1$ | $k'_2$ | |
| 1-Naphthylethanol | 8,64 | 11,78 | 1,36 |
| Benzoin | 11,52 | 15,18 | 1,32 |
| Troeger'sche Base | 2,62 | 23,76 | 9,07 |

**Patentansprüche**

1. Feinteilige Celluloseester aromatischer oder aromatisch-aliphatischer Carbonsäuren in Form von im wesentlichen sphärischen teilkristallinen Teilchen mit einem mittleren Durchmesser von 1 bis 200 $\mu$m, einer spezifischen Oberfläche von 10 bis 300 m$^2$/g, gemessen nach der BET-Methode, und einer kalorimetrisch bestimmten Schmelzwärme von 1 bis 50 J/g.

2. Celluloseester gemäss Anspruch 1, worin der mittlere Durchmesser 3 bis 100 $\mu$m beträgt.

**3.** Celluloseester gemäss Anspruch 1, worin der mittlere Durchmesser 5 bis 80 $\mu$m beträgt.

**4.** Celluloseester gemäss Anspruch 1, worin die spezifische Oberfläche 20 bis 80 m$^2$/g beträgt.

**5.** Celluloseester gemäss Anspruch 1, worin die spezifische Oberfläche 30 bis 70 m$^2$/g beträgt.

**6.** Celluloseester gemäss Anspruch 1, worin die Schmelzwärme 5 bis 30 J/g beträgt.

**7.** Celluloseester gemäss Anspruch 1, worin die Schmelzwärme 10 bis 25 J/g beträgt.

**8.** Celluloseester gemäss Anspruch 1, worin die Carbonsäure der Formel

R-X-COOH

entspricht, worin X für eine direkte Bindung, $C_1$-$C_4$-Alkylen, $C_2$-$C_4$-Alkenylen, -Alkyliden oder -Alkinylen steht und R mono-, bi- oder tricyclisches $C_6$-$C_{14}$-Aryl oder Heteroaryl mit jeweils 5 oder 6 Ringatomen und einem bis drei Heteroatomen aus der Gruppe N, O oder S darstellt, wobei R unsubstituiert oder mit $C_1$-$C_{12}$-Alkyl, $C_1$-$C_{12}$-Alkoxy, $C_1$-$C_{12}$-Alkylthio, Phenyl, Phenoxy, Phenylthio, Benzyl, Benzyloxy, Benzylthio, Cyano, Halogen, $C_1$-$C_8$-Acyl, $C_1$-$C_8$-Acyloxy, Hydroxyl, $C_1$-$C_{12}$-Alkoxycarbonyl, Phenoxycarbonyl, Benzyloxycarbonyl, Nitro oder Di($C_1$-$C_6$-alkyl)amino ein- oder mehrfach substituiert ist.

**9.** Celluloseester gemäss Anspruch 8, worin X für eine direkte Bindung, $C_1$-$C_3$-Alkylen oder $C_2$-$C_3$-Alkenylen steht und R unsubstituiertes oder substituiertes Phenyl, Naphthyl oder Pyridyl ist.

**10.** Celluloseester gemäss Anspruch 9, worin R unsubstituiertes oder substituiertes Phenyl, Naphthyl oder Pyridyl und X eine direkte Bindung, Methylen, Ethylen oder Ethenylen sind.

**11.** Verfahren zur Herstellung von Celluloseestern gemäss Anspruch 1, dadurch gekennzeichnet, dass man unter kräftigem Rühren eine Lösung eines Celluloseesters aromatischer oder aromatisch-aliphatischer Carbonsäuren in einem organischen Lösungsmittel, das 1 bis 50 Vol-%, bezogen auf die Menge des Lösungsmittels, eines $C_5$-$C_{22}$-Alkanols enthält, langsam zu einer Lösung eines anionischen Tensids in Wasser zugibt, unter Weiterrühren das organische Lösungsmittel entfernt, die festen Teilchen isoliert, auswäscht und trocknet.

**12.** Verfahren gemäss Anspruch 1, dadurch gekennzeichnet, dass das organische Lösungsmittel einen niedrigeren Siedepunkt als Wasser aufweist.

**13.** Verfahren gemäss Anspruch 2, dadurch gekennzeichnet, dass das Lösungsmittel ein aromatischer Kohlenwasserstoff, ein Halogenkohlenwasserstoff, ein cyclischer Ether, ein Carbonsäureester oder Keton ist.

**14.** Verfahren gemäss Anspruch 1, dadurch gekennzeichnet, dass das Alkanol 7 bis 16 C-Atome enthält.

**15.** Verfahren gemäss Anspruch 4, dadurch gekennzeichnet, dass das Alkanol 7 bis 12 C-Atome enthält.

**16.** Verfahren gemäss Anspruch 11, dadurch gekennzeichnet, dass das Alkanol in einer Menge von 5 bis 40 Vol-% enthalten ist, bezogen auf die Menge des organischen Lösungsmittels.

**17.** Verfahren gemäss Anspruch 11, dadurch gekennzeichnet, dass es sich bei dem Tensid um eine Säure, einen Halbester von zwei- bis vierbasischen Säuren oder deren Salze handelt.

**18.** Verfahren gemäss Anspruch 11, dadurch gekennzeichnet, dass es sich bei dem Tensid um Laurylsulfat handelt.

**19.** Verfahren gemäss Anspruch 11, dadurch gekennzeichnet, dass das Volumenverhältnis der organischen Lösung zur wässrigen Phase von 10:1 bis 1:10 beträgt.

**20.** Verwendung von Celluloseestern gemäss Anspruch 1 als stationäre Phase in chromatographischen

EP 0 316 270 B1

Verfahren, besonders zur Trennung von Racematen.

21. Feinteilige Celluloseester aromatischer oder aromatisch-aliphatischer Carbonsäuren, erhältlich nach dem Verfahren gemäss Anspruch 11.

**Claims**

1. A finely particulate cellulose ester of an aromatic or aromatic-aliphatic carboxylic acid in the form of substantially spherical, partially crystalline particles having an average diameter of 1 to 200 $\mu$m, a specific surface area of 10 to 300 $m^2$/g, measured in accordance with the BET method, and a calorimetrically determined heat of fusion of 1 to 50 J/g.

2. A cellulose ester according to claim 1, having an average diameter of 3 to 100 $\mu$m.

3. A cellulose ester according to claim 1, having an average diameter of 5 to 80 $\mu$m.

4. A cellulose ester according to claim 1, having a specific surface area of 20 to 80 $m^2$/g.

5. A cellulose ester according to claim 1, having a specific surface area of 30 to 70 $m^2$/g.

6. A cellulose ester according to claim 1, having a heat of fusion of 5 to 30 J/g.

7. A cellulose ester according to claim 1, having a heat of fusion of 10 to 25 J/g.

8. A cellulose ester according to claim 1, in which the carboxylic acid has the formula in which X is a direct bond, $C_1$-$C_4$alkylene, $C_2$-$C_4$alkenylene, $C_2$-$C_4$alkylidene or $C_2$-$C_4$alkynylene, and R is monocyclic, bicyclic or tricyclic $C_6$-$C_{14}$aryl or heteroaryl, each having 5 or 6 ring atoms and one to three hetero atoms selected from the group consisting of N, O and S, R being unsubstituted or monosubstituted or polysubstituted by $C_1$-$C_{12}$alkyl, $C_1$-$C_{12}$alkoxy, $C_1$-$C_{12}$alkylthio, phenyl, phenoxy, phenylthio, benzyl, benzoxy, benzylthio, cyano, halogen, $C_1$-$C_8$acyl, $C_1$-$C_8$acyloxy, hydroxyl, $C_1$-$C_{12}$alkoxycarbonyl, phenoxycarbonyl, benzoxycarbonyl, nitro and di($C_1$-$C_6$alkyl)amino.

9. A cellulose ester according to claim 8 in which X is a direct bond, $C_1$-$C_3$alkylene or $C_2$-$C_3$alkenylene, and R is unsubstituted or substituted phenyl, naphthyl or pyridyl.

10. A cellulose ester according to claim 9 in which R is unsubstituted or substituted phenyl, naphthyl or pyridyl, and X is a direct bond, methylene, ethylene or ethenylene.

11. A process for the preparation of a cellulose ester according to claim 1, which comprises slowly adding, with efficient stirring, a solution of a cellulose ester of an aromatic or aromatic-aliphatic carboxylic acid in an organic solvent that contains 1 to 50 % by volume, based on the amount of the solvent, of a $C_5$-$C_{22}$alkanol, to a solution of an anionic surfactant in water, removing the organic solvent with continued stirring, isolating the solid particles and washing and drying them.

12. A process according to claim 11, wherein the organic solvent has a lower boiling point than that of water.

13. A process according to claim 12, wherein the solvent is an aromatic hydrocarbon, a halogenated hydrocarbon, a cyclic ether, a carboxylic acid ester or a ketone.

14. A process according to claim 11, wherein the alkanol contains 7 to 16 carbon atoms.

15. A process according to claim 14, wherein the alkanol contains 7 to 12 carbon atoms.

16. A process according to claim 11, wherein the alkanol is present in an amount of 5 to 40 % by volume, based on the amount of the organic solvent.

17. A process according to claim 11, wherein the surfactant is an acid, a semiester of a dibasic to

9

EP 0 316 270 B1

tetrabasic acid or a salt thereof.

**18.** A process according to claim 11, wherein the surfactant is lauryl sulfate.

**19.** A process according to claim 11, wherein the volume ratio of the organic solution to the aqueous phase is from 10:1 to 1:10.

**20.** Use of a cellulose ester according to claim 1 as stationary phase in chromatography, especially for resolving racemates.

**21.** A finely particulate cellulose ester of an aromatic or aromatic-aliphatic carboxylic acid, obtainable by the process according to claim 11.

**Revendications**

**1.** Esters de cellulose, en fines particules, d'acides carboxyliques aromatiques ou aromatique-aliphatiques, sous forme de particules essentiellement sphériques et en partie cristallines ayant un diamètre moyen de 1 à 200 $\mu$m, une surface spécifique de 10 à 300 $m^2/g$, mesurée selon la méthode BET, et une chaleur de fusion, déterminée par calorimétrie, de 1 à 50 J/g.

**2.** Esters de cellulose selon la revendication 1, dans le cas desquels le diamètre moyen va de 3 à 100 $\mu$m.

**3.** Esters de la cellulose selon la revendication 1, dans le cas desquels le diamètre moyen va de 5 à 80 $\mu$m.

**4.** Esters de la cellulose selon la revendication 1, dans le cas desquels la surface spécifique va de 20 à 80 $m^2/g$.

**5.** Esters de cellulose selon la revendication 1, dans le cas desquels la surface spécifique est de 30 à 70 $m^2/g$.

**6.** Esters de cellulose selon la revendication 1, dans le cas desquels la chaleur de fusion va de 5 à 30 J/g.

**7.** Esters de cellulose selon la revendication 1, dans le cas desquels la chaleur de fusion va de 10 à 25 J/g.

**8.** Esters de cellulose selon la revendication 1, dans lesquels l'acide carboxylique répond à la formule :

R-X-COOH

dans laquelle X représente une liaison directe, un groupe alkylène en $C_1$ à $C_4$, alcénylène en $C_2$ à $C_4$, alkylidène ou alcynylène en $C_2$ à $C_4$ et R représente un groupe aryle ou hétéroaryle en $C_6$ à $C_{14}$, monocyclique, dicyclique ou tricyclique, comportant chacun 5 ou 6 atomes de noyau et 1 à 3 hétéroatomes choisis parmi N,O ou S,
R n'étant pas substitué ou étant substitué une ou plusieurs fois par un reste alkyle en $C_1$ à $C_{12}$, alcoxy en $C_1$ à $C_{12}$, alkylthio en $C_1$ à $C_{12}$, phényle, phénoxy, phénylthio, benzyle, benzyloxy, benzylthio, cyano, halogéno, acyle en $C_1$ à $C_8$, acyloxy en $C_1$ à $C_8$, hydroxyle, alcoxy (en $C_1$ à $C_{12}$)-carbonyle, phénoxycarbonyle, benzyloxycarbonyle, nitro ou di(alkyl en $C_1$ à $C_4$) amino.

**9.** Esters de la cellulose selon la revendication 8, dans lesquels X représente une liaison directe, un reste alkylène en $C_1$ à $C_3$, ou alcénylène en $C_2$ ou $C_3$, et R représente un reste phényle, naphtyle ou pyridyle, non substitué ou substitué.

**10.** Esters de cellulose selon la revendication 9, dans lesquels R représente un reste phényle, naphtyle ou pyridyle non substitué ou substitué, et X est une liaison directe ou représente un groupe méthylène, éthylène ou éthénylène.

10

11. Procédé pour préparer des esters de cellulose selon la revendication 1, caractérisé en ce qu'on ajoute lentement, sous agitation énergique, une séparation d'un ester de cellulose d'acides carboxyliques aromatiques ou aromatique-aliphatiques dans un solvant organique, qui contient 1 à 50 % en volume (par rapport à la quantité du solvant) d'un alcanol en $C_5$-$C_{22}$, à une séparation d'un tensio-actif anionique dans de l'eau, on élimine le solvant organique en continuant à agiter, on isole les particules solides, on les lave et on les sèche.

12. Procédé selon la revendication 1, caractérisé en ce que le solvant organique présente un point d'ébullition inférieur à celui de l'eau.

13. Procédé selon la revendication 2, caractérisé en ce que le solvant est un hydrocarbure aromatique, un hydrocarbure halogéné, un éther cyclique, un ester d'acide carboxylique ou une cétone.

14. Procédé selon la revendication 11, caractérisé en ce que l'alcanol contient 7 à 16 atomes de carbone.

15. Procédé selon la revendication 14, caractérisé en ce que l'alcanol contient 7 à 12 atomes de carbone.

16. Procédé selon la revendication 11, caractérisé en ce que l'alcanol est contenu, en une quantité de 5 à 40 % en volume, par rapport à la quantité du solvant organique.

17. Procédé selon la revendication 11, caractérisé en ce qu'il s'agit, pour les tensio-actifs, d'un acide, d'un hémi-ester de diacide à tétraacide ou de leurs sels.

18. Procédé selon la revendication 11, caractérisé en ce qu'il s'agit pour le tensio-actif d'un lauryl sulfate.

19. Procédé selon la revendication 11, caractérisé en ce que le rapport en volume entre la solution organique et la phase aqueuse se situe entre 10:1 et 1:10.

20. Utilisation d'esters de la cellulose selon la revendication 1, à titre de phase stationnaire dans des procédés chromatographiques, notamment pour la séparation de racémiques.

21. Ethère de cellulose en fines particules, d'acides carboxyliques aromatiques ou aromatique-aliphatiques, que l'on peut obtenir selon le procédé de la revendication 11.